(19) **Europäisches Patentamt**

**European Patent Office**

**Office européen des brevets**

(11) **EP 1 028 595 A2**

(12) **EUROPEAN PATENT APPLICATION**

(43) Date of publication:
16.08.2000 Bulletin 2000/33

(51) Int. Cl.7: **H04N 9/69**, H04N 9/04

(21) Application number: 00200433.1

(22) Date of filing: 09.02.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **10.02.1999 US 119402**

(71) Applicant:
**Texas Instruments Incorporated**
**Dallas, Texas 75251 (US)**

(72) Inventors:
• **Talluri, Rajendra K.**
  **Plano, Texas 75023 (US)**
• **Yoo, Youngjun**
  **Richardson, Texas 75080 (US)**
• **Illgner, Klaus**
  **Dallas, Texas 75243 (US)**

(74) Representative: **Holt, Michael**
  **Texas Instruments Ltd.,**
  **PO Box 5069**
  **Northampton, Northamptonshire NN4 7ZE (GB)**

(54) **Improvements in or relating to digital cameras**

(57) Digital Still Camera (DSC) includes performing gamma correction (320) while still in the color-filtered array format and performs IDCT down-sampling for reduced size images for playback on lower resolution devices.

FIG. 3

## Description

BACKGROUND OF THE INVENTION

This invention relates to integrated circuits, and more particularly, to integrated circuits and methods for use with digital cameras.

Recently, Digital Still Cameras (DSCs) have become a very popular consumer appliance appealing to a wide variety of users ranging from photo hobbyists, web developers, real estate agents, insurance adjusters, photo-journalists to everyday photography enthusiasts. Recent advances in large resolution CCD arrays coupled with the availability of low-power digital signal processors (DSPs) has led to the development of DSCs that come quite close to the resolution and quality offered by traditional film cameras. These DSCs offer several additional advantages compared to traditional film cameras in terms of data storage, manipulation, and transmission. The digital representation of captured images enables the user to easily incorporate the images into any type of electronic media and transmit them over any type of network. The ability to instantly view and selectively store captured images provides the flexibility to minimize film waste and instantly determine if the image needs to be captured again. With its digital representation the image can be corrected, altered, or modified after its capture. See for example, Venkataraman et al, "Next Generation Digital Camera Integration and Software Development Issues" in Digital Solid State Cameras: Design and Applications, 3302 Proc. SPIE (1998). Also, US Patent No.5,189,511 discloses a digital system with CCD camera, digital signal processing, and color printing.

SUMMARY OF THE INVENTION

The invention provides a digital still camera with image processing that performs gamma correction prior to color-filtered array interpolation and/or that down samples in the DCT domain for NTSC display.

This has advantages including less computation.

BRIEF DESCRIPTION OF THE DRAWINGS

The present invention will now be further described by way of example, with reference to the accompanying drawings in which:

Figures 1a-1b show a DSC system in functional block format.
Figures 2a-2b illustrate color-filtered array and spectral sensitivity.
Figure 3 is a functional block diagram of preferred embodiments.
Figures 4a-4b show gamma and inverse gamma corrections.

DECRIPTION OF THE PREFERRED EMBODIMENTS

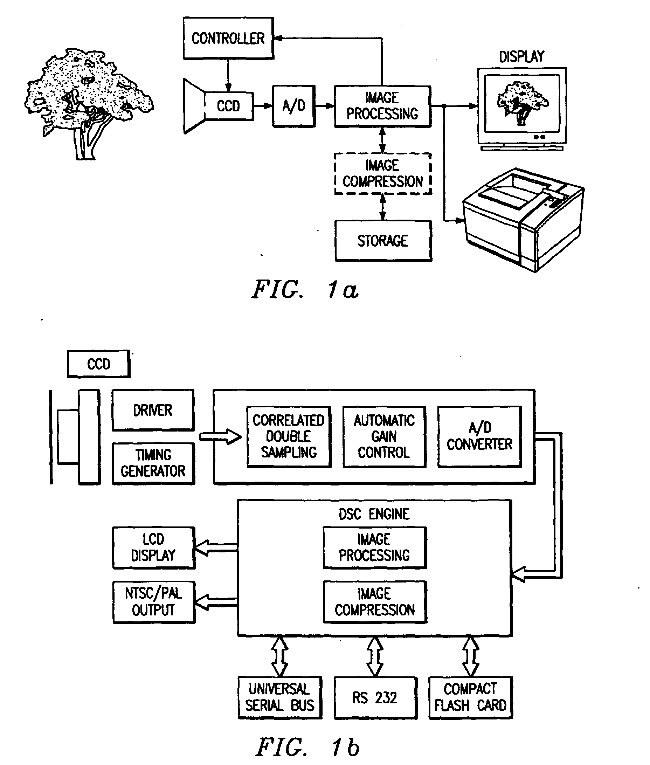

Figures 1a-1b show the various high-level functional blocks in preferred embodiment digital still cameras (DSCs) and systems. The illustrated DSCs use a CCD imager to sense the images, although a CMOS imager could be substituted. The driver electronics and the Timing Generator circuitry generate the necessary signals to clock the CCD. Correlated Double Sampling and Automatic Gain Control electronics are used to get a good quality image signal from the CCD sensor. This CCD data is then digitized and fed into the DSC Engine. All the image processing and image compression operations are performed in the DSC Engine. The captured images are stored on a non-volatile memory, such as a compact flash memory card (CFC), for later use. On most DSCs the user has the ability to view the image to be captured as well as the captured image on a LCD display. DSC systems may also provide an NTSC/PAL video signal to view the captured images and the preview images on a TV monitor. DSCs also provide a number of ways to connect to an external PC or printer through an RS 232 or a USB port.

DSC systems may be even more versatile with the ability to annotate images with text/speech. The preferred embodiment programmable DSP allows easy inclusion of a modem and/or a TCP/IP interface for direct connection to the Internet. DSCs may also run more complex multi-tasking operating systems to schedule the various real-time tasks.

The basic modes of operation of the preferred embodiment DSCs include (1) Capture of an image, (2) Preview of the captured image, (3) Playback of the capture image, and (4) Communication of the image with other devices. In the Capture mode, data from the CCD is digitized by the A/D converter and stored in memory as raw CCD data. This data is then processed by the DSC engine and compressed to save memory space and stored in a non-volatile memory (NV-memory) such as a compact flash card. In the Preview mode the raw CCD data is digitized and processed in real-time and displayed directly on the LCD display attached to the DSC system. Cameras may also provide methods to display the preview data on an external TV monitor. In the Playback mode of operation the DSC system at user control reads the compressed data from the NV-memory (CFC), decompresses the data and displays the image on the LCD monitor or the external TV monitor (as the case may be). In the Communication mode, the DSC system allows for transmission of the compressed image data from the NV-memory to an external device such as a PC or a printer through the USB (Universal Serial Bus) or the RS-232 serial interface or other interface. The concept puts no constraint on the interface such that future interfaces such as IEEE-1394, Bluetooth, can also be supported.

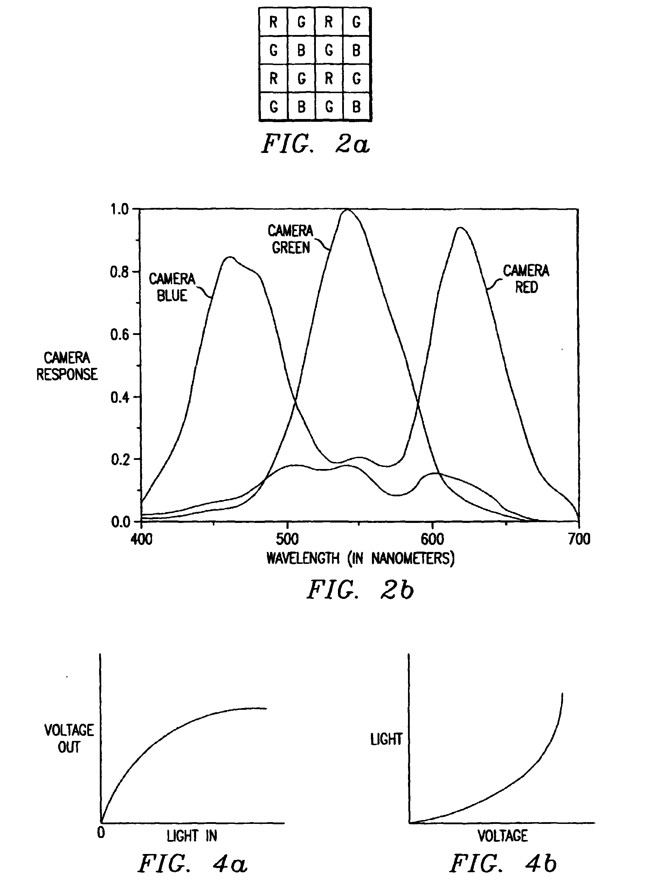

A DSC usually has to perform multiple processing steps before a high quality image can be stored. The first step is the image acquisition. The intensity distribution reflected from the scene is mapped by an optical system onto the imager. The preferred embodiments use CCDs, but a shift to CMOS does not alter the image processing principles. To provide a color image the imager (CCD or CMOS) has each pixel masked by a color filter (such as a deposited dye on each CCD photosite). This raw imager data is normally referred as a Color- Filtered Array (CFA). The masking pattern of the array of pixels in the CCD as well as the filter color primaries vary between different manufacturers. In DSC applications, the CFA pattern that is most commonly used is an RGB Bayer pattern that consists of 2x2 cell elements which are tiled across the entire CCD-array. Figure 2a depicts a subset of this Bayer pattern in the matrix block following the CCD camera. Note that half of the pixels are sensitive to green and that the red and blue are balanced to green. Figure 2b shows typical spectral sensitivity of CCD color imager pixels.

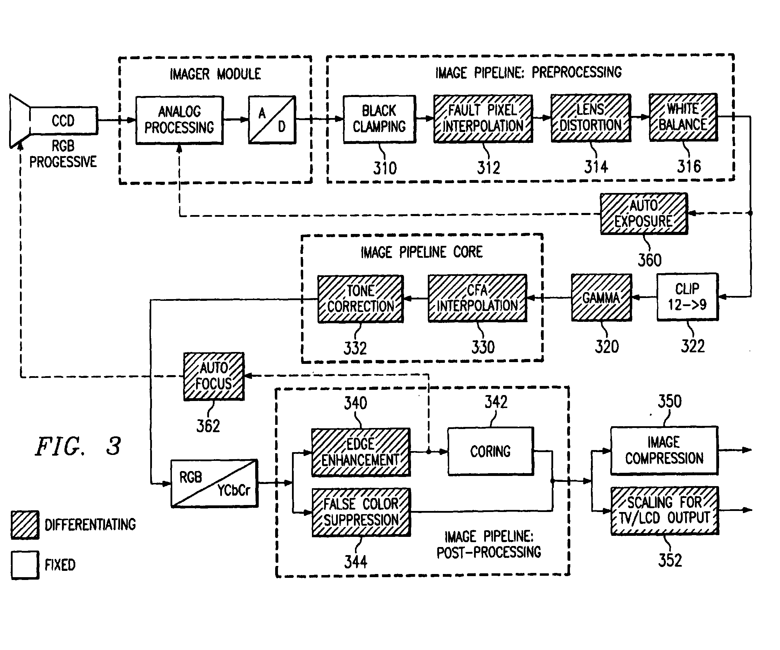

CFA data needs to undergo a significant amount of image processing before the image can be finally presented in a usable format for compression or display. All these processing stages are collectively called the "image pipeline". As shown in Figure 3, the preferred embodiment DSCs may perform multiple processing steps before a high quality image can be stored. The image pipeline shown in Figure 3 provides a trade-off between processing speed and image quality. Most of the image pipeline processing tasks are multiply-accumulate (MAC) intensive operations, making a DSP a preferred platform. The various image pipeline processing stages are described in the following sections.

The A/D converter digitizing the CCD imager data may have a resolution of 10 to 12 bits. This allows for a good dynamic range in representing the input image values. Of course, higher resolution implies higher quality images but more computations and slower processing; and lower resolution implies the converse.

After A/D conversion the "black" pixels do not necessarily have a 0 value due to a CCD which may still record some current (charge accumulation) at these pixel locations. In order to optimize the dynamic range of the pixel values represented by the CCD imager, the pixels representing black should have a 0 value. The black clamp function 310 adjusts for this by subtracting an offset from each pixel value. Note that there is only one color channel per pixel at this stage of the processing.

CCD-arrays may have defective (missing) pixels, especially arrays with more than 500,000 elements. The missing pixels are filled by interpolated with a simple interpolation 312. A high order interpolation may not be necessary because an interpolation is also performed in the CFA interpolation stage. Therefore, the main reason for this preliminary interpolation step is to make the image processing regular by eliminating missing data.

Typically, the locations of the missing pixels are obtained from the CCD manufacturer. The faulty pixel locations can also be computed by the DSC engine offline. For example, during camera initialization operation, an image with the lens cap closed is captured. The faulty pixels appear as "white spots" while the rest of the image is dark. The faulty pixel locations can then be identified with a simple threshold detector and stored in memory as a bitmap.

During the normal operation of the DSC the image values at the faulty pixel locations are filled by a simple bilinear interpolation technique.

Due to non-linearities introduced by imperfections in lenses, the brightness of the image decreases from the center of the image to the borders of the image. The effects of these lens distortions are compensated by adjustment of the brightness of each pixel as a function fo its spatial location. The parameters describing the lens distortions need to be measured with the final system, supported by information supplied by the lens manufacturer.

The lens adjustment 314 can be accomplished by multiplying the pixel intensity with a constant, where the value of the constant varies with the pixel location. The adjustment needs to be done for both horizontal and vertical directions.

The captured colors usually do not represent the "expected" colors. Two effects account for this. First, the sensitivity of CCDs over the illumination intensity range varies among the color primaries. In order to represent neutral "colors" with equal RGB values, the red and blue color primaries need to be balanced with respect to the green channel.

Second, the illumination while recording a scene typically is different from the illumination viewing a picture. This results in a different color appearance, which causes effects like a bluish appearance of a face or a reddish appearance of the sky. The optimal solution to avoid these artifacts requires a transformation of the illuminants. However, since the illuminants are mostly not known, balancing of the energies of the three color components is a frequently used and suitable alternative. This so-called equal energy approach requires an estimate of the unbalance between the color components based either on the previous or the current frame. Having determined a scaling factor, each pixel of the blue and red color band gets scaled.

During the operation of the camera, white balance 316 computes the average brightness of each of the red and blue color components to obtain the scaling factor and multiply the red and blue color components with the scaling factor. This operation includes an overall scaling such that the dynamic range fits into the following gamma correction stage.

Display devices (TV monitors) used to display images and printers used to print images have a non-linear mapping between the image gray value and the actual displayed pixel intensities. Hence, in the preferred embodiment DSC Gamma correction stage 320 compensates the CCD images to adjust them for eventual display/printing.

Gamma correction is a non-linear operation; Figures 4a-4b illustrate the non-linearity of the Gamma and Inverse gamma corrections. The preferred embodiments implement the corrections as table look ups. The advantages of table look up are high speed and high flexibility. The look-up table data might even be provided by the camera manufacturer.

With 12-bit data, a full look-up table would have 4K entries, with each entry 8 to 12 bits. For a smaller look-up table, a piecewise linear approximation to the curves of Figures 4a-4b could be used. For example, the 6 most significant bits could address a 64-entry look-up table whose entries are pairs of values: a base value (8 to 12 bits) and a slope (6 bits). Then the product of the 6 least significant bits and the slope is added to the base value to yield the final corrected value of 8 to 12 bits.

Note that LCD displays can be considered to be linear, making gamma compensation unnecessary. However, LCD display modules usually expect an NTSC input (which is already gamma compensated) and hence perform some "gamma uncorrection" (inverse gamma correction) to compensate for this expected gamma correction. So in the preferred embodiment DSCs using such LCD preview modules, still perform Gamma correction and then NTSC encode the signal before feeding it to the LCD module.

Gamma correction may be performed at the end of the all the stages of the image pipeline processing and just before going to the display. However, the preferred embodiment pipelines perform the Gamma correction earlier in the pipeline: before the CFA interpolation stage. The advantages of this approach are:

(a) Less computation is required. At this stage of the pipeline the data is still in the CFA format and is hence 1/3 the data size after the CFA stage.
(b) Typically gamma correction introduces banding effects due to the quantization of the gray values. These effects are compensated by the subsequent CFA interpolation filters, which smooth the image.
(c) The precision of the gamma correction can be higher. Typically the output is required to be 8-bit. Hence, the gamma correction if performed after all other image pipeline stages can only be done in 8-bit. However, if performed at this earlier stage can be up to the full A/D converter resolution 10-12 bits.
(d) At this stage the gamma correction can be done in RGB color space, rather than the YCbCr space. Recall that the TV monitor electron guns are in RGB.
(e) The color de-saturation introduced by the gamma correction on RGB is less significant.

Note that the 12-bit data can optionally be clipped to 9 bits by clip stage 322; this speeds up the gamma correction (plus smaller look-up table) but still provides more than 8-bit precision.

Due to the use of a color-filtered array, the effective resolution of each of the color planes is reduced. At any given pixel location there is only one color pixel information (either of R, G, or B in the case of RGB color primaries). However, to generate a full color resolution (R,G,and B) at each pixel in the DSC. To be able to do this, the missing pixel values (R and B at the G location, etc.) are reconstructed by interpolation from the values in a local neighborhood in the CFA interpolation stage 330. To take advantage of the DSP in this system a FIR-kernel is employed as interpolation filter. The length of the filter and the weights vary from one implementation to the other. Also the interband relationship has to be considered.

Changes in the color appearance caused by differing illuminants between capture and playback/print cannot be corrected just by balancing the red, green and blue channels independently. To compensate for this, a tone correction matrix step 332 maps the RGB pixel values to corrected RGB pixel values that take the illuminant into account.

The principle is as follows. Let I1 denote the illuminant present at the recording moment, S the spectral sensitivity of the sensor, and R the reflectance spectrum at a single pixel location. The measured RGB triplet at this pixel location is given than by

$$X1 = S * I1 * R.$$

Assuming the reflectance does not change between different illuminants, the imager signal can be transformed into the signal under illuminant I2:

$$X2 = S\_CIE * I2 * R = S\_CIE * I2 * [S * I1]^{-1} * X1$$

where a transformation of the color sensor sensitivity curves to the human spectral response curves S_CIE according to the CIE standard has been included.

This 3x3 conversion matrix $S\_CIE * I2 * [S * I1]^{-1}$ can be calculated off-line, assuming that the spectral response of the sensor can be measured and a set of tone correction matrices for different illuminants can be stored in the camera.

Some users might have different preferences what "good" colors are. These preferences can be included into this matrix.

After the CFA interpolation 330 and tone correction 332 the pixels are still in the color space of the sensor's primary colors, typically the RGB color space. Since the compression algorithm (JPEG) is based on the YCbCr color space, a color space transformation must be carried out. Also the preferred embodiment DSCs generate a NTSC signal output for display on the TV and also to feed into the LCD preview. Hence an RGB to YCbCr color space conversion needs to be carried out. This is a linear transformation and each Y, Cb, Cr value is a weighted sum of the R, G, B values at that pixel location.

After CFA interpolation the images appear a little "smooth" due to the low pass filtering effect of the interpolation filters. To sharpen the images it is sufficient to operate on the Y-component only. At each pixel location we compute the edge magnitude using an edge detector, which is typically a two-dimensional FIR filter. In the current system a 3x3 Laplace-Operator is used. The edge magnitude is then scaled and added to the original luminance (Y) image to enhance the sharpness of the image in step 340.

The edge enhancement 340 is a high pass filter. This high pass filter also amplifies the noise. To avoid this amplified noise, a threshold detect mechanism is used to only enhance those portion of the image lying in an edge. This refinement of the high pass filter is noted as coring step 342.

Note that the edge enhancement is only performed in the Y image. At edges the interpolated images of the color channels may not be aligned well. This causes annoying rainbow-like artifacts at sharp edges. Therefore, by suppressing the color components Cb and Cr at edges in the Y-component, these artifacts can be reduced. Depending on the output of the edge detector, the color components Cb and Cr are multiplied by a factor less than 1 on a per pixel basis to suppress the false color artifacts in step 344.

The image compression step 350 compresses the image, typically by about 10:1 to 15:1. Most DSCs use JPEG compression. This is a DCT-based image compression technique that gives good performance.

Due to the varying scene brightness, to get a good overall image quality, it is necessary to control the exposure of the CCD to maximize the dynamic range of the digitized image. Step 360 accomplishes auto exposure by sensing the average scene brightness and appropriately adjusting the CCD exposure time and/or gain. The DSP performs this operation in a closed loop feed back fashion.

It is also possible to automatically adjust the lens focus in a DSC through image processing. Similar to Auto Exposure, these auto focus mechanisms operate also in a feed back loop. They perform image processing to detect the quality of lens focus and move the lens motor iteratively till the image comes sharply into focus. Step 362 shows the auto focus relying on edge measurements from the edge enhancement step 340.

The preferred embodiment image pipeline has been implemented on a TMS320C549 DSP. This system interfaces to the CCD/CMOS module directly. The DSP reads the data from the sensor, processes the raw sensor data and writes it to the SDRAM external memory. The built-in NTSC/PAL encoder chip on the board allows direct display of the processed picture on the TV monitor. In implementing the image pipeline on the DSP, the SDRAM controller efficiently fetches the image data from the external memory to the on-chip memory in 16 x 16 blocks. All the image pipeline operations including JPEG compression can be performed by the C54x DSP on this 16 x 16 block of pixels and then the compressed bit stream is written out to the SDRAM.

In this system, the image pipeline operations are executed on-chip since a small 16 x 16 block of the image is used. For these operations, the TMS320C549 is well suited due to its large on-chip memory [32K x 16-bit RAM and 16K x 16-bit ROM]. This eliminates the need for external high-speed memory. Furthermore, this device offers high performance (100 MIPS) at low power consumption (0.45mA/MIPS).

Table 1 illustrates a detailed cycle count for the different stages of the image pipeline software. Due to the efficiency of the C54x instruction set and architecture, the entire image pipeline including JPEG takes about 190 cycles/pixel. Hence, a 1 Mega-pixel CCD image can be processed in less than 2 seconds on a 100MHz C54x. This offers about 2 second shot-to-shot delay including data movement from external memory to on-chip memory.

The preferred embodiment DSCs also provide the ability for the user to view the captured images on LCD screen on the camera or on an external TV monitor; see step 352. Since the captured images are stored on the compact flash memory as JPEG bitstreams, playback mode software is also provided on the DSP. This playback mode software decodes the JPEG bitstream, scales the decoded image to the appropriate spatial resolution, and displays it on the LCD screen and/or the external TV monitor. The C54x playback mode software executes in 160 cycles/pixel. This offers a 1.6 second playback of a Mega-pixel image.

In the preferred embodiment DSC system the image during the playback mode after decoding the JPEG data is at the resolution of the CCD sensor, e.g. 1Mega pixel (1024 x 1024). This image can even be larger depending on the resolution the CCD sensor. However, for the display purposes, this decoded data has to be down-sampled to NTSC resolution (720 x 480) before it can be fed into the NTSC encoder. Hence, the DSC should implement a down-sampling filter at the tail end of the playback mode thereby requiring additional DSP computation.

The preferred embodiment solves this problem of additional DSP computations by a DCT-domain down-sampling scheme that is included as part of the JPEG decompression module. Note that the JPEG decompression essentially involves three stages: first an entropy decoding stage, followed by an inverse quantization stage, and finally an IDCT stage. In JPEG the IDCT is performed on a block of 8 x 8 pixels. The preferred embodiments down sample a Mega-pixel image to NTSC resolution (a 5/8 down-sampling) in the IDCT domain by utilizing only the top left 5 x 5 DCT coefficients (out of a 8 x 8 DCT coefficient block) and hence effectively achieving both the IDCT and the 5/8 down-sampling in one step.

A separable two-dimensional 5-point IDCT is applied to obtain a 5 x 5 block of image pixels from the top-left (low spatial frequency) 5 x 5 DCT coefficients. By this low-order IDCT we effectively combine anti-aliasing filtering and 8-to-5 decimation. The employed anti-aliasing filter corresponds to a simple operation of preserving only the 5 lowest frequency components in the DCT domain without scaling the preserved DCT coefficients. Though this simple filter is effective in reducing aliasing effect, the preferred embodiments may have a lowpass filter with better frequency response to further reduce aliasing. The use of other lowpass filters will lead to scaling of the preserved coefficients where the scaling factor is the location of each DCT coefficient.

Note that the DCT domain down-sampling technique does not increase the computational complexity. In fact, it reduces the computation since the JPEG decoding stages after entropy decoding does not need to deal with the whole 8 x 8 DCT coefficients except the top-left 5 x 5 coefficients. Use of other anti-aliasing filters also does not add any complexity since the coefficient scaling operation can be merged into the low-order IDCT operation. Also note that this DCT domain down-sampling idea technique can offer n/8 down-sampling ratios, n = 1, ..., 7, for other CCD sensor resolutions.

Displaying cropped images for zooming of images also uses an up-sampling scheme. The inverse approach to the down-sampling provides an elegant tool. In the first case the 8x8 DCT coefficients are (virtually) vertically and horizontally extended with zeroes to form a block of NxM coefficients (N,M >8). On this block an IDCT of size NxM is executed yielding NxM samples in the spatial domain.

Table 1

| C54x Performance | | | |
|---|---|---|---|
| Function | Cycles | Description | Comments |
|  |  |  |  |
| Image Capture | 190 cycles/colorpixel | Total for reading the CCD data from SDRAM and writing JPEG bitstream stream to SDRAM | A 100 MHz C54X can capture a 1024 x 1024 image in < 2 seconds (shot to shot delay) |
| 1. Data Input | 26 cycles/colorpixel | Reading data from external memory to on chip memory | |
| 2. Pipeline | 93.6 cycles/colorpixel | All the image processing | |
| - Preprocess | 22.4 cycles/colorpixel | | |
| - CFA + color Transform | 40.6 cycles/colorpixel | color Filter Interpolation and color space conversion | |
| - edge enhancement & color suppression | 26.6 cycles/colorpixel | Edge sharpening and suppression false colors | |
| - copy & Scale | 4 cycles/colorpixel | copying the image and scaling | |
| - JPEG Encode | 70.4 cycles/colorpixel | Total JPEG Encode (image dependent) | |
| - Data Set-up | 4 cycles /colorpixel | Set-up and initialization | |
| - DCT | 28.2 cycles/colorpixel | Discrete Cosine Transform | |

Table 1 (continued)

| C54x Performance | | | |
|---|---|---|---|
| Function | Cycles | Description | Comments |
| -Quantization - Entropy Coding | 6.3 cycles/colorpixe31.9 cycles/colorpixel | Qunatization of the DCT data Zig-zag, scanning and Huffman Encoding | |
| - Entropy Coding | 31.9 cycles/colorpixel | Zig-zag, scanning and Huffman Encoding | |
| | | | |
| 3. Image Playback | 157.9 cycles/colorpixel | Total for reading compressed data from the SDRAM and displaying the down-sampled (640 x 480) image to the NTSC encoder | Can decode a 1 Mega pixel image, down-sample and display in about 1.6 seconds. |
| - Data Input | 48.2 cycles/colorpixel | Bitstream reading from offchip memory | |
| - JPEG Decode | 71.1 cycles/colorpixel | Complete JPEG decode to NTSC display | |
| - Inverse quantization | 22.6 cycles/colorpixel | De-quantization | |
| - Entropy Decode | 30 cycles/colorpixel | Huffman Decoding | |
| - IDCT | 18.5 cycles/colorpixel | IDCT routine | |
| - overhead | | | |
| - Display Write | 38.6 cycles/color pixel | Move the data from on chip to the display buffer | |

Table 2 shows the program and data memory requirements to process the image pipeline and compress the image with JPEG standard. This code density allows the complete image pipeline software to reside on-chip. Having the complete software on-chip reduces external memory accesses and allows the use of slower external memory. This reduces overall system cost and lowers system power consumption.

Table 2

| C54x Memory Requirements | |
|---|---|
| Memory | K Bytes |
| Program | 1.7 |
| Data | 4.6 |

Currently, most of the image pipeline operations are non-standardized. Having a programmable DSC engine offers the ability to upgrade the software to conform to new standards or improve image pipeline quality. Unused performance can be dedicated to other tasks, such as human interface, voice annotation, audio recording/compression, modem, wireless communication, etc.

**Claims**

1. A method of operating a digital still camera, comprising the steps of:

acquiring an image in color-filtered array format;
gamma correcting said image to form a gamma corrected image; and
color-filtered array interpolating said gamma corrected image.

2. A method of operating a digital still camera, comprising the steps of:

decompressing a compressed image for playback, wherein said compressed image includes N x N blocks of DCT data, by applying M x M-point inverse DCT to the M x M lowest spatial frequency components of said N x N blocks wherein M and N are positive integers and M is less than N; and
displaying said decompressed image from step (a).

*FIG. 1a*

*FIG. 1b*

| R | G | R | G |
|---|---|---|---|
| G | B | G | B |
| R | G | R | G |
| G | B | G | B |

*FIG. 2a*

CAMERA
RESPONSE

CAMERA
GREEN

CAMERA
BLUE

CAMERA
RED

WAVELENGTH (IN NANOMETERS)

*FIG. 2b*

VOLTAGE
OUT

LIGHT IN

*FIG. 4a*

LIGHT

VOLTAGE

*FIG. 4b*

**IMAGER MODULE**

**IMAGE PIPELINE: PREPROCESSING**

CCD

RGB PROGESSIVE

ANALOG PROCESSING

A/D

BLACK CLAMPING
310

FAULT PIXEL INTERPOLATION
312

LENS DISTORTION
314

WHITE BALANCE
316

AUTO EXPOSURE
360

**IMAGE PIPELINE CORE**

TONE CORRECTION
332

CFA INTERPOLATION
330

GAMMA
320

CLIP 12->9
322

AUTO FOCUS
362

*FIG. 3*

RGB / YCbCr

EDGE ENHANCEMENT
340

CORING
342

FALSE COLOR SUPPRESSION
344

IMAGE PIPELINE: POST-PROCESSING

IMAGE COMPRESSION
350

SCALING FOR TV/LCD OUTPUT
352

DIFFERENTIATING

FIXED